# EUROPEAN PATENT SPECIFICATION

(11) **EP 1 980 435 B1**
(45) Date of publication and mention of the grant of the patent: **09.06.2010**
(21) Application number: 07007499.2
(22) Date of filing: 12.04.2007
(51) Int. Cl.: B60J 3/02

(54) **Sun visor assembly, sun visor and method of assembling it**
Sonnenblendenkonstruktion, Sonnenblende und Montageverfahren dafür
Assemblage de pare-soleil, pare-soleil et son procédé d'assemblage

(43) Date of publication of application: 15.10.2008
(73) Proprietor: GRUPO ANTOLIN-INGENIERIA, S.A., 09007 Burgos (ES)
(72) Inventor: Antoine, Eric, 88360 Rupt-sur-Moselle (FR); Japtap, Deepak, 88360 Rupt-sur-Moselle (FR)
(74) Representative: Carpintero Lopez, Francisco

(56) References cited:
- EP-A1- 0 655 359
- WO-A-2006/064027
- DE-U1- 20 217 313
- FR-A- 2 788 730
- JP-A- 10 315 764

## Description

### FIELD OF THE INVENTION

The invention relates to the field of sun visors useful for motor vehicles.

### STATE OF THE ART

In motor vehicles, sun visors are often provided in order to protect the driver from incoming sunlight. Often, a sun visor is also provided for the passenger sitting next to the driver. These sun visors are normally provided on a (substantially horizontal) shaft or similar so that they can be pivoted between a "non-operative" position (in which they do not protect the driver from incoming sunlight) and one or more "operative" positions, in which they prevent or substantially prevent the incoming light from arriving directly at the driver's (or passenger's) eyes. Also, often, the shaft can also be pivoted between a position in which it extends substantially parallel with the windscreen of the vehicle, and a position substantially aligned with a side window of the vehicle.

Often, these sun visors incorporate a mirror (sometimes referred to as a "vanity mirror") and a cover for the mirror. The cover can often be slid from a closed position (in which it covers the mirror) and an open position (in which it does not cover the mirror or, at least, leaves a substantial part of the mirror uncovered).

There exist at least two different basic technologies for producing this type of sun visors.

A first one of these technologies corresponds to sun visors based on one single moulded grid (made in some kind of plastic material), onto each major surface of which an external part comprising foam is applied. The assembly is then covered with some kind of cover, such as a textile cover. The external foam part can be made up of -or be based on- polyurethane, expanded polyethylene, etc.

In this kind of sun visors, the only structural member is the grid. Thus, the means for attaching or holding the mirror, as well as the means for holding the cover and for guiding it in its movement between its closed and its open position, are all embodied in the plastic grid part.

FR-A-2788730 discloses an example of this kind of sun visor, based on one single grid and two foamed elements applied onto its major surfaces. Rails are provided for guiding the mirror and the cover, and means are provided for retaining the mirror.

An alternative sun visor technology is based on the use of two shells, normally of some kind of plastic material, normally obtained by injection moulding. These two shells constitute, when assembled together, the structural element of the sun visor. Further, some kind of cover or lining is normally applied, as well as additional elements, such as the vanity mirror and its cover.

In this kind of "twin shell" sun visors, the means for holding the mirror and for guiding and holding the cover are conventionally established partly by one of the shells and partly by the other shell, so that it is the combination of the shells, when assembled together, that establishes the complete set of means (such as guide rails with guide grooves) for guiding and holding these elements in place. Now, this implies a rather complex assembly process, as the mirror and/or the cover will not be held appropriately in place until both shells have been assembled together. For example, the mirror and the cover can be placed on a first one of the shells, and then the other shell can be applied over said first shell, so that, once both shells have been duly interconnected, the mirror and the cover are trapped between the shells, with the longitudinal ends of the cover held within guide grooves along which the cover can slide.

In order to facilitate the process of assembly, an alternative "twin shell" technique involves the use of a mirror cartridge that, at some state of the assembly process, is coupled to the shells. This mirror cartridge holds the mirror and the cover and thus overcomes the difficulties involved with incorporating the mirror and the cover between the shells during the assembly process. One of the shells includes additional guide rails for guiding the cover in its movement between the open and the closed position, and said guide rails must be correctly positioned and aligned with respect to the cartridge. Also, there is normally a "snapping" noise when the cover is displaced between its closed and open position, caused by the transfer of the leading or trailing edge of the cover between the guide rails of the cartridge and the guide rails of the shell. Also, the guide rails normally have a "U" shape that makes it more difficult to obtain the shells by moulding, as the withdrawal of the moulded elements from the mould becomes a more complex issue.

DE-U-20217313 discloses a prior art twin shell structure with a cartridge for the mirror and the cover, wherein the upper shell is provided with guide rails for the cover. WO-A-2006/064027 discloses another example of a twin shell sun visor structure with a cartridge for holding the mirror and the cover, and wherein a single guide rail for guiding the cover is provided in the lower shell.

JP-A-10-315764 appears to disclose a mirror cartridge used in a wire frame sun visor.

### DESCRIPTION OF THE INVENTION

A first aspect of the invention relates to a sun visor assembly comprising:
a front shell having an opening (a mirror opening, for allowing a user to view a mirror) and a rear shell, said front and rear shells being arranged to be coupled together and comprising connection means (that is, clips and/or other means for attaching the two shells to each other, such as contact surfaces to be welded together, etc.) for keeping said front and rear shells coupled together once they have been assembled to each other, so as to constitute a sun visor body structure. That is, the sun visor is basically a "twin shell" type sun visor.

Further, the assembly comprises a cartridge housing a mirror and a cover for the mirror. The cartridge comprises mirror holding means for holding the mirror, so that it cannot move or at least so that it is substantially immobilised, and guide means for guiding the cover so that the cover can slide between an open position in which it does not substantially cover the mirror (that is, in which it leaves the mirror uncovered so that it can be seen through the opening in the front shell), and a closed position in which it substantially covers the mirror (so that the user cannot view it from outside the sun visor).

The cover has two longitudinal edges, and the guide means establish, for each longitudinal edge, at least one longitudinal support surface over which the cover can slide when moving between its closed position and its open position.

The longitudinal support surface can be continuous or not, that is, it can be a continuous surface that is present all along the total extension of the support surface (that is, from one end to the other), or it can be interrupted at one or more occasions along its extension.

According to the invention, when the cover is in its closed position, said at least one support surface extends longitudinally substantially beyond the corresponding longitudinal edge of the cover, so as to provide support to said longitudinal edge when the cover is displaced towards its open position.

Thus, the cartridge itself provides a longitudinally extended support surface, for example, longitudinally extended guide rails, thus making it unnecessary to establish guide rails or other support surfaces in the front or rear shells. This substantially simplifies the production of the shells (such as the moulding process), as well as the assembly process, as no alignment between guide rails in the cartridge and guide rails in the shells is necessary. Also, the operation of the cover becomes more reliable, as it does not need to slide between guide rails associated to different parts or elements of the assembly.

The shells as well as the cartridge can be made up of single, moulded, plastic elements.

The cartridge can be assembled after finishing of the sun visor, that is, after assembly of, for example, a covering surface material like PVC or a fabric and after assembly of other components, such as an articulation or holding arm, or similar.

The at least one support surface can extend longitudinally a distance X beyond the corresponding longitudinal edge of the cover when the cover is in the closed position, X being equal to or larger than 10% (or 20%, or 30%, or 40%, or 50%, or even 75% ) of the length of said longitudinal edge. Sometimes, it may be preferable that the support surface not extend to far, in which case X can be less than, for example, 50% of the length of said longitudinal edge. Basically, it is normally enough if the support surface supports the cover (in the longitudinal direction) along a portion of each of its longitudinal edges when the cover is in its open position, such as along 10%, or 20%, or 30%, or 40% of its longitudinal edges. A shorter extended support surface can simplify the assembly process.

The at least one support surface can have a length (in the longitudinal direction)of at least 125% (or even at least 150%) of the length of the corresponding longitudinal edge.

The selection of a suitable length or extension of the support surface can easily be made by the skilled person, in view of the other design conditions that must be considered in each specific case.

Thus, it can be preferred that none of said front shell and rear shell comprises guide rails and/or guide grooves for guiding the cover when moving between its open and its closed position.

The cartridge can further comprise a frame part arranged to abut against an outer surface of said front shell, so as to cover the edges of the opening and further to block the front shell in its position. The support surfaces can extend longitudinally beyond the orthogonal projection of the frame, that is, when viewed from above, these support surfaces can extend beyond the perimeter of the frame and, thus, also beyond the perimeter of the opening. For example, the support surfaces can extend longitudinally a distance Y beyond the orthogonal projection of the frame, Y being, for example, at least 15% of the length of the cover or even at least 25% of the length of the cover.

For example, the entire cartridge (including the extension represented by the support surfaces) can have a length at least 15% (or at least 25%) longer than the length of the opening.

The rear shell can comprise coupling means (such as clips and/or openings and/or recesses) complementary to coupling means (such as openings and/or recesses and/or clips) provided on the cartridge, so as to lock the cartridge to the rear shell (for example, by snap connection) when assembled.

The cartridge has a body portion dimensioned to be inserted through the opening in the front shell, said body portion including at least a part of said guide means for the cover.

At least a part of the guide means can be arranged to define a guide channel dimensioned to house a corresponding longitudinal edge of the cover, said guide means abutting against opposite surfaces of the cover along said guide channel.

The cartridge can be provided with at least one flexible element arranged to abut against a rear surface of the cover, so as to contribute to a control of the force necessary to move the cover longitudinally, and so as to reduce the tendency of "flapping" of the cover.

The cover can further be provided with at least two position defining elements, such as transversal projections or recesses, arranged to interact with said at least one flexible element when the cover passes from its closed position to its open position, so as to provide for a snap interaction between a first one of said position defining elements and said flexible element when the cover substantially reaches its open position, and a snap interaction between a second one of said position defining elements and said flexible element when the cover substantially reaches its closed position. Thus, a clear "snap definition" of said open and closed positions is obtained, at a force exceeding a certain threshold is needed to move the cover from any of said positions, thus contributing to avoiding the risk for "accidental opening" or "closing" of the cover.

The rear shell can comprise one single element, directly obtained as such, as a single piece, by injection moulding. However, in accordance with an alternative implementation of the invention, the rear shell can comprise a shell part and a reinforcing grid part, both obtained in separate steps of injection moulding, whereby the grid part can be placed in the shell part so as to constitute, together with the shell part, the rear shell. If so, the different coupling means of the rear shell arranged to interact with coupling means of the cartridge can be embodied in said grid part. The grid part can comprise means for connecting it to the shell part of the rear shell and/or to the front shell. Thus, these three parts can be preassembled, and subsequently the cartridge can be assembled to the interconnected shells.

A further aspect of the invention relates to a sun visor, comprising a sun visor assembly as described above, with the front shell and rear shell interconnected and the cartridge mounted (except the frame, when there is such a frame; the frame can abut against the outer surface of the front shell) between said front and rear shells, the cover being accessible through the opening (or, at least, in correspondence with the opening) in the front shell.

A further aspect of the invention relates to a method of assembling a sun visor out of a sun visor assembly as described above, comprising the steps of
- interconnecting the front shell and the rear shell;
- inserting a longitudinally projecting portion of the guide means for the cover through the opening in the front shell (for example, by movement in a first direction, that can be inclined although substantially parallel with regard to the shells; the projecting portion corresponds to at least a part of the longitudinal extension of the support surfaces, as describe above, that is, of the longitudinal extension extending beyond the longitudinal edges of the cover when the cover is in its closed position);
- subsequently, inserting a main portion of the cartridge through said opening until it becomes coupled to the rear shell (this can be done by, basically, pushing the body of the cartridge against the rear shell, thus pivoting the cartridge around its front part).

The main portion of the cartridge can in that way become coupled to the rear shell by snap connection. When the cartridge has a frame, this frame can abut against the outer surface of the front shell, covering the edges of the opening in the front shell. Thus, the cartridge will help to interlock the front and rear shells.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:
Figure 1.- Shows an exploded perspective view of a cartridge of an assembly in accordance with a preferred embodiment of the invention.
Figures 2A and 2B.- Show a perspective view of the cartridge, with the cover in its open and in its closed position, respectively.
Figures 3A-3F.- Schematically illustrate how the cartridge can be assembled to the shells, in accordance with a preferred embodiment of the invention.
Figures 4 and 5.- Show partial perspective views of the rear shell.
Figure 6.- Illustrates a top view of the assembly in accordance with said preferred embodiment of the invention, with the front shell cut away.
Figures 7A-7C.- Show a top view, a transversal cross section and a longitudinal cross section of the sun visor, respectively.
Figure 8.- Schematically illustrates a possible embodiment of the front and rear shells.

### DESCRIPTION OF A PREFERRED EMBODIMENT OF THE INVENTION

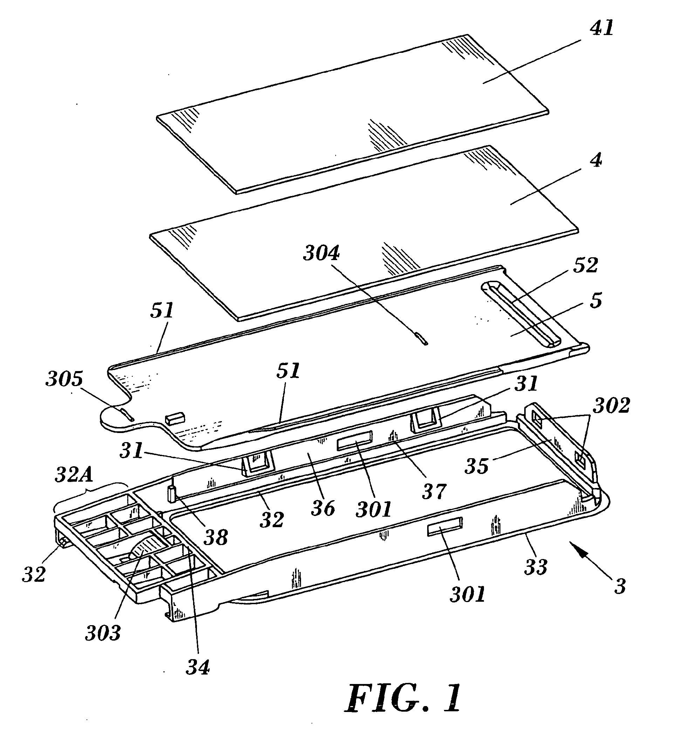

Figure 1 illustrates a cartridge 3, into which a cover 5, a mirror 4 and a plastic plate with adhesive 41, that covers a rear face of the mirror 4 (and that serves to retain broken pieces of the mirror after a crash impact, as known in the state of art), when the assembly is in its assembled state. The cover can be inserted into the cartridge 3 to rest on a support surface 32, and afterwards the mirror 4 (with the adhesive plate 41) is inserted and held in place by clips 31 or other suitable means for retaining the mirror within the cartridge. Front 34 and rear 35 transversal walls delimit the space within the cartridge, and the mirror will be prevented from moving by the longitudinal side walls 36, the clips 31, the rear wall 35, a longitudinal support surface 37 and a pair of stops 38, all of which represent support surfaces for the mirror against which the mirror abuts, so as to be held firmly in place.

However, the cover, also trapped between the side walls 36, the rear wall 35, the mirror and the cover support surface 32, can move longitudinally, between a closed position (in which it covers the mirror so that it cannot be observed from outside when the sun visor is in use) and an open position, in which it leaves a major part of the mirror uncovered, so that it can be seen from outside.

Apart from the "box" or "body portion" defined by the side walls 36, the front wall 34 and the rear wall 35, the cartridge comprises a frame 33 and an extending or projecting portion 32A, arranged so as to provide an extended portion of the support surface 32 which will support the cover 5 when displaced towards its open position. Thus, the support surface will at least partly support the corresponding longitudinal edges 51 of the cover 5, also when it is in its maximally open position.

The side walls 36 and the rear wall 35 are provided with openings 301 and 302, arranged to interact with coupling means such as clips provided in the rear shell of the sun visor assembly, so as to attach the cartridge to the rear shell. Further, a spring element 303 is provided that exerts a certain elastic force on the rear surface of the cover, so as to reduce the risk for noise due to "flapping" of the cover, especially when it is in its open position.

Also, in order to more reliably maintain the cover in its open and closed position, respectively, the rear surface of the cover is provided with two protruding portions 304 and 305, one of which -305- will be situated next to the spring element 303 when the cover is in its closed position, so that it will have to pass the spring element and deflect it when the cover passes towards its open position. The other protruding portion 304 will be positioned just passed the spring element 303 when the cover is in its open position, so that it will have to pass the spring element, deflecting it, when the cover is moved from the open position towards the closed position. Thus, the interaction between these two protruding portions 304 and 305 and the spring element 303 will cause a "snap" interaction between the spring element and the cover 5, in correspondence with the open and closed positions of the cover, respectively.

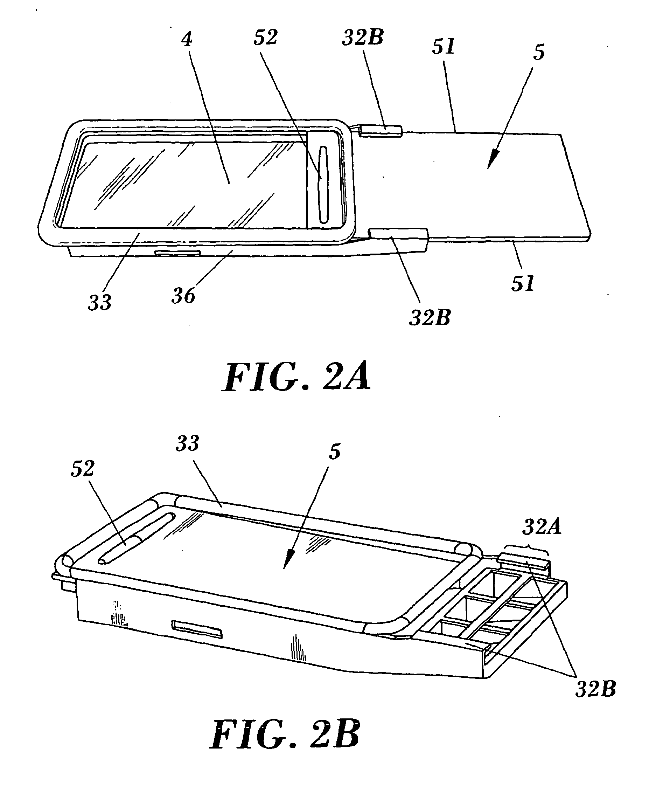

Figures 2A and 2B illustrate the cartridge with the cover in its open position (leaving the mirror 4 uncovered) and in its closed position, respectively. Guide rails 32B extend from the main body or portion of the cartridge, defining the corresponding support surfaces for the longitudinal edges 51 of the cartridge. In figure 2A it can be observed how these guide rails 32B provide support for part of the cover even in the maximum open position of the cover.

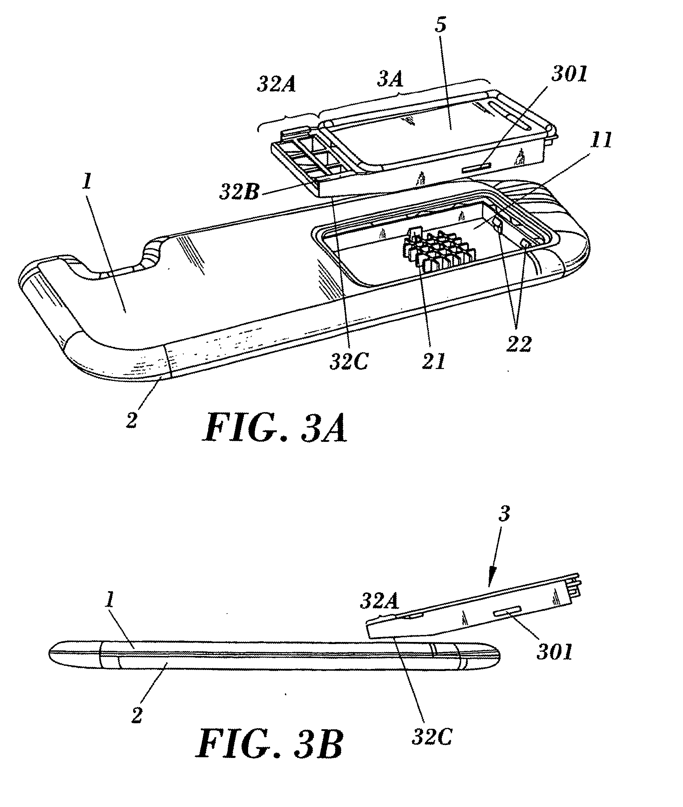

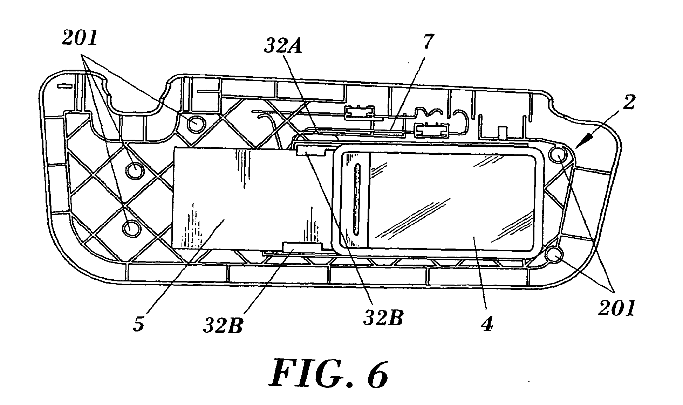

Figure 3A-3F schematically illustrate how the cartridge is to be assembled to the sun visor shells. A front shell 1 and a rear shell 2 are interconnected (for example, by conventional clips 201 as illustrated in figure 6 and/or by other conventional connection means, such as other kinds of snap connection, welding, etc.), thus making up a body structure of the sun visor.

Figure 3A is a perspective view of said body structure, comprising said front shell 1 and rear shell 2. The front shell comprises an opening 11 having a substantially rectangular shape, the length of said opening substantially corresponding to the length 3A of the main body or portion of the cartridge, not including the extension 32A. Within the opening, the clips 21, 22 of the rear shell 2, used for retaining the cartridge, are schematically illustrated.

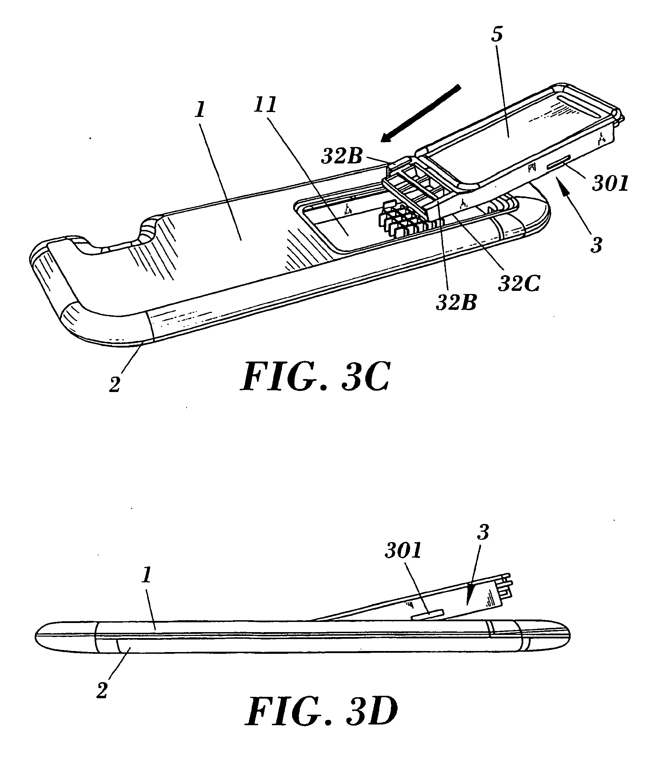

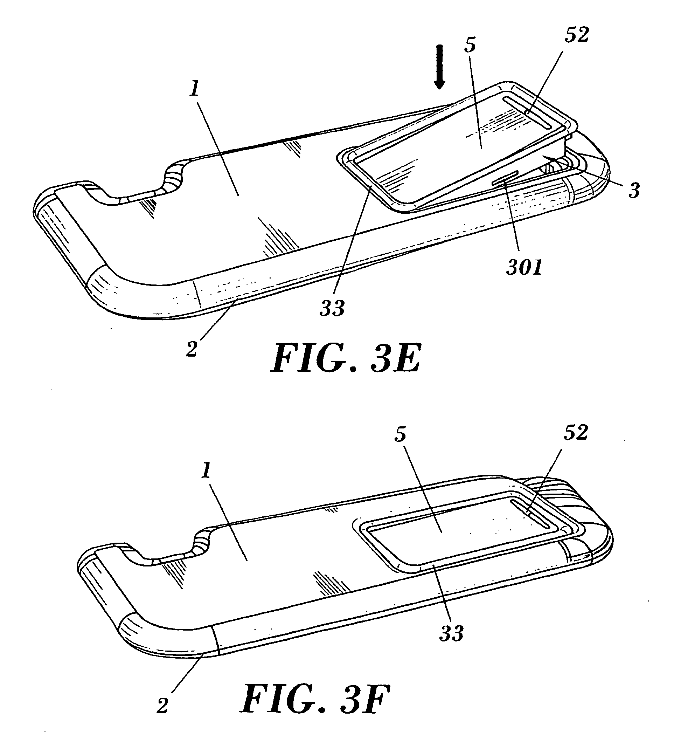

Thus, in order to insert the cartridge 3 into the body structure of the sun visor, the cartridge is inclined (as illustrated in figure 3B) and inserted, with the extending portion 32A first (figures 3C and 3D), until it abuts against a corresponding edge of the opening 11 (as shown in figure 3E). Then, the cartridge is pressed downwards (figure 3E), pivoting around its front part, until the clips 21 and 22 of the rear shell 2 snap into the corresponding openings 301, 302 in the walls of the cartridge. The frame 33 of the cartridge remains outside the shells, abutting against the outer surface of the front shell 1, as shown in figure 3F. Thus, the cartridge serves as a further interconnection or interlocking of the front and rear shells. Now, a user can move the cover longitudinally towards its open position; a rib 52 is provided on the outer surface of the cover 5 so as to facilitate movement of the cover by the user.

Figure 6 schematically illustrates a top view of the sun visor, with the front shell cut away and the cover in its open position. It can be observed how the extending guide rails 32B provide support for the cover also in its open position, wherefore no guide rails for the cover are needed in the shells. The distance (corresponding to 32A) by which the guide rails extend from the main portion of the cartridge can be readily chosen by the skilled person. However, it can be convenient to choose said extension so that support surfaces 32 are provided that, when the cover is in its closed position, extend a distance X beyond the corresponding longitudinal edge 51 of the cover, X being at least 10% of the length of said longitudinal edge 51. The longer this distance X, the better the support provided, but, on the other hand, a long extending portion of the cartridge will also make the assembly process more complicated (as can be readily understood from figures 3A-3F) and imply more restrictions on the design of the shells. The skilled person will easily be able to choose the correct dimension for each specific assembly design. In the drawings (for example, figures 3A-3C) it can, for example, be observed how the cartridge 3, in correspondence with the extending portion 32A, is provided with an inclined surface 32C, so as to reduce the risk for interaction between that part of the cartridge and the rear shell, during assembly.

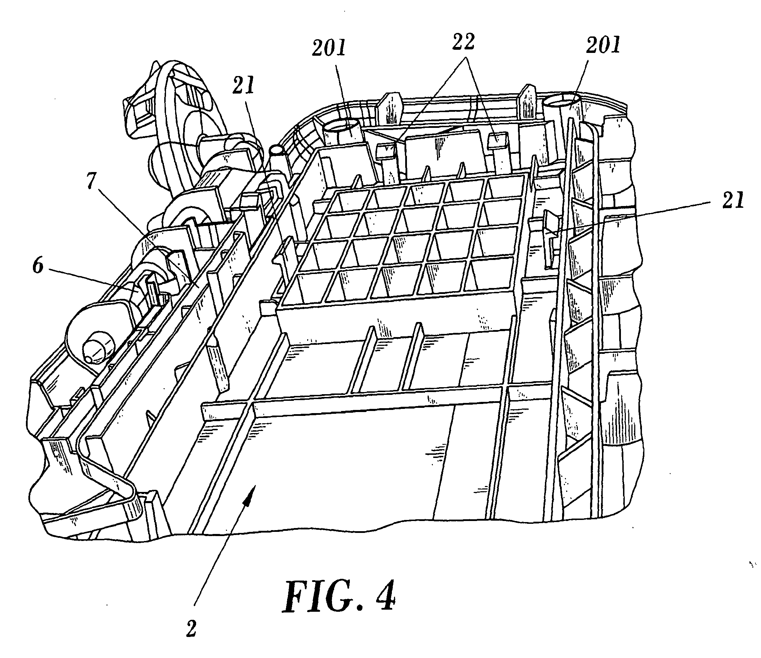

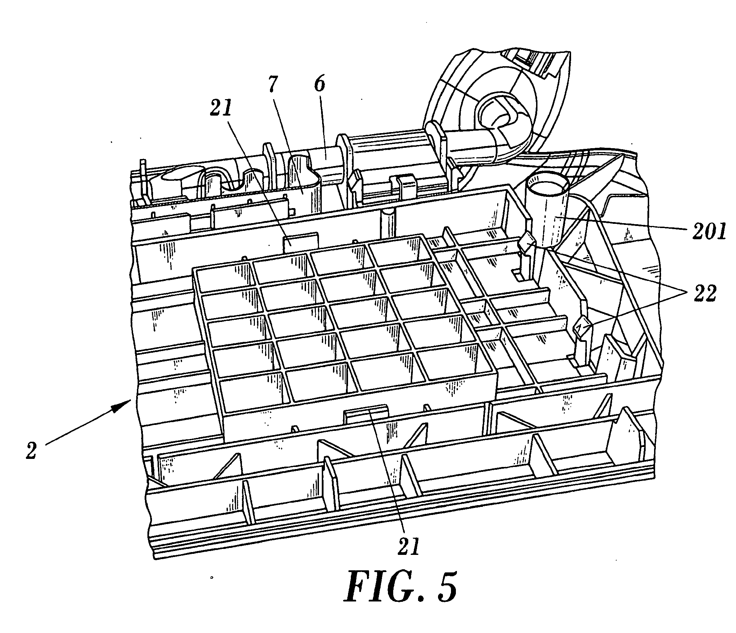

Figures 4 and 5 schematically illustrate the rear shell connected to a supporting arm 6 of the sun visor, a conventional spring means 7 being provided so as to make it possible to selectively set the sun visor in a plurality of positions, pivoting it around the arm 6. In figures 4 and 5, the clips 21 and 22 for snap connection of the cartridge can be observed.

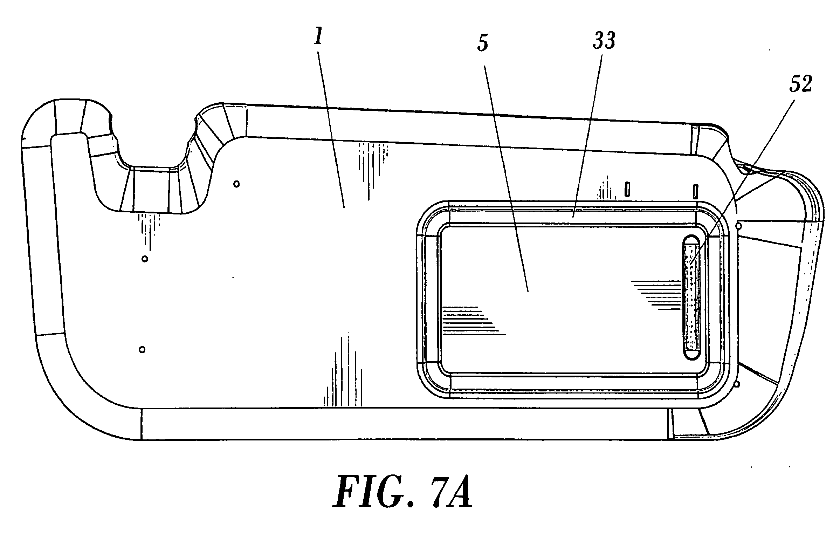

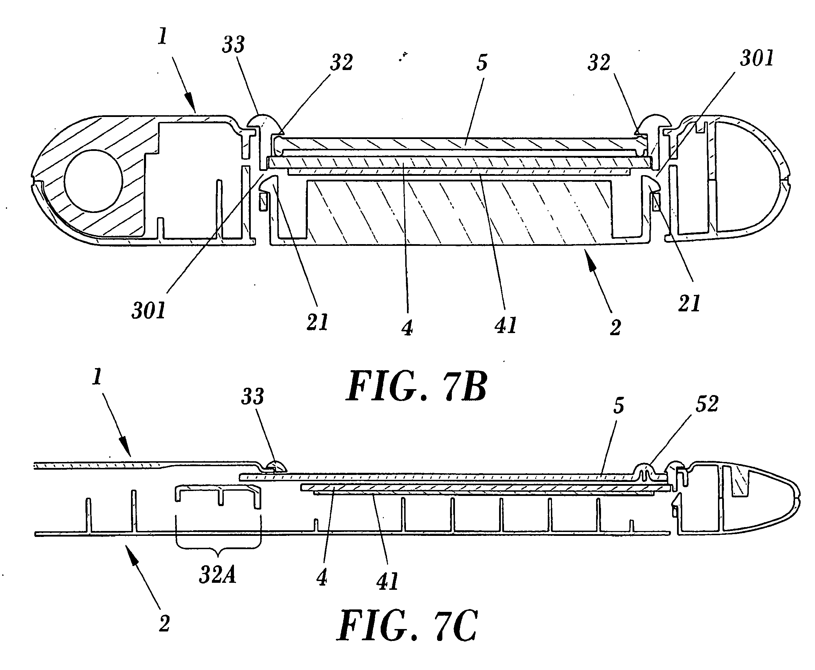

Figures 7A-7C illustrate different views of the sun visor, further illustrating the components and connections discussed further above.

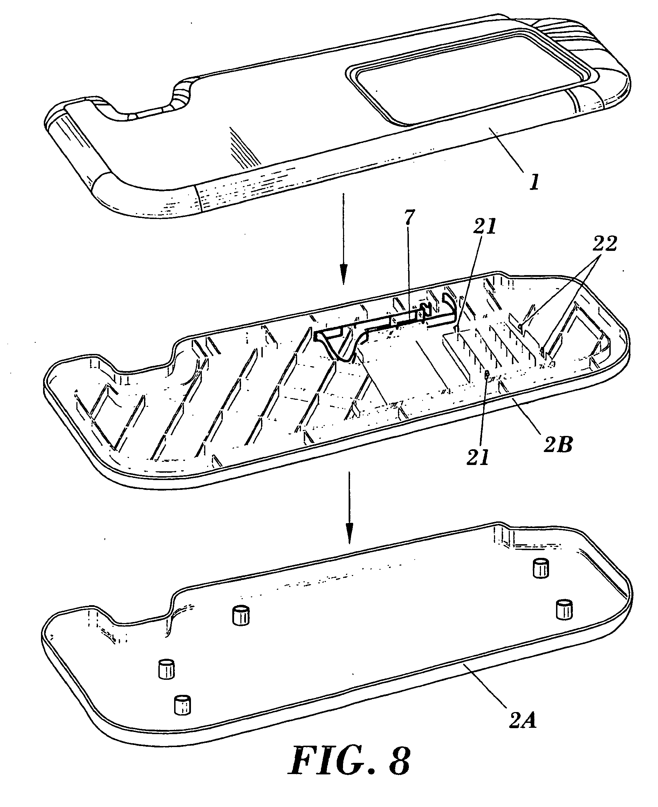

Figure 8 schematically illustrates how the front shell 1 comprises one single body obtained by injection moulding, whereas the rear shell comprises a shell part 2A and a reinforcing grid part 2B, both obtained or obtainable in separate injection moulding steps, whereby said shell part 2A and grid part 2B can be interconnected to form the rear shell. The grid part can comprise the different coupling clips 21 and 22 of the rear shell, arranged to interact with coupling means of the cartridge.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Sun visor assembly comprising
a front shell (1) having a mirror opening (11), and a rear shell (2), the front shell and the rear shell being arranged to be coupled together and comprising connection means (201) for keeping said front and rear shells (1,2) coupled together once they have been assembled to each other, so as to constitute a sun visor body structure, and
a cartridge (3) housing a mirror (4) and a cover (5), said cartridge comprising mirror holding means (31) for holding the mirror (4) and guide means for guiding the cover (5) so that the cover (5) can slide between an open position in which it does not substantially cover the mirror (4), and a closed position in which it substantially covers the mirror (4), said cover (5) having two longitudinal edges (51), said guide means establishing, for each longitudinal edge (51), at least one longitudinal support surface (32) over which the cover (5) can slide when moving between its closed position and its open position;
**characterised in that**
when the cover (5) is in its closed position, said at least one support surface (32) extends longitudinally substantially beyond the corresponding longitudinal edge (51) of the cover (5), so as to provide support to said longitudinal edge (51) when the cover (5) is displaced towards its open position.

2. Sun visor assembly according to claim 1, wherein said at least one support surface (32) extends longitudinally a distance X beyond the corresponding longitudinal edge (51) of the cover when the cover is in the closed position, X being equal to or larger than 10% of the length of said longitudinal edge (51).

3. Sun visor assembly according to claim 2, wherein X is equal to or larger than 20% of the length of said longitudinal edge (51).

4. Sun visor assembly according to claim 2, wherein X is equal to or larger than 30% of the length of said longitudinal edge (51).

5. Sun visor assembly according to claim 2, wherein X is equal to or larger than 40% of the length of said longitudinal edge (51).

6. Sun visor assembly according to claim 2, wherein X is equal to or larger than 50% of the length of said longitudinal edge (51).

7. Sun visor assembly according to claim 2, wherein X is equal to or larger than 75% of the length of said longitudinal edge (51).

8. Sun visor assembly according to any of claims 2-5, wherein X is less than 50% of the length of said longitudinal edge (51).

9. Sun visor assembly according to claim 1, wherein said at least one support surface (32) has a length of at least 125% of the length of the corresponding longitudinal edge (51).

10. Sun visor assembly according to claim 1, wherein said at least one support surface (32) has a length of at least 150% of the length of the corresponding longitudinal edge (51) .

11. Sun visor assembly according to any of the preceding claims, wherein none of said front shell (1) and rear shell (2) comprises guide rails for guiding said cover when moving between its open and its closed position.

12. Sun visor assembly according to any of the preceding claims, wherein said cartridge comprises a frame part (33) arranged to abut against an outer surface of said front shell (1).

13. Sun visor assembly according to claim 12, wherein said at least one support surface (32) extends longitudinally beyond the orthogonal projection of the frame.

14. Sun visor assembly according to claim 13, wherein said at least one support surface (32) extends longitudinally a distance Y beyond the orthogonal projection of the frame, Y being at least 15% of the length of the cover.

15. Sun visor assembly according to claim 14, wherein Y is at least 25% of the length of the cover.

16. Sun visor assembly according to any of the preceding claims, wherein the cartridge (3) has a length at least 15% longer than the length of the opening (11).

17. Sun visor assembly according to any of the preceding claims, wherein the cartridge (3) has a length at least 25% longer than the length of the opening (11).

18. Sun visor assembly according to any of the preceding claims, wherein said rear shell (2) comprises coupling means (21, 22) arranged to interact with coupling means (301, 302) on the cartridge, so as to lock the cartridge (3) to the rear shell (2) when assembled.

19. Sun visor assembly according to any of the preceding claims, wherein the cartridge has a body portion dimensioned to be inserted through the opening (11) in the front shell (1) , said body portion including said guide means for the cover.

20. Sun visor assembly according to any of the preceding claims, wherein at least a part of said guide means (32B) are arranged to define a guide channel dimensioned to house a corresponding longitudinal edge of the cover, said guide means abutting against opposite surfaces of the cover along said guide channel.

21. Sun visor assembly according to any of the preceding claims, wherein said cartridge is provided with at least one flexible element (303) arranged to abut against a rear surface of the cover (5).

22. Sun visor assembly according to claim 20, wherein said cover (5) is provided with at least two position defining elements (304, 305) arranged to interact with said at least one flexible element (303) when the cover passes from its closed position to its open position, so as to provide for a snap interaction between a first one (304) of said position defining elements and said flexible element (303) when the cover substantially reaches its open position, and a snap interaction between a second one (305) of said position defining elements and said flexible element (303) when the cover substantially reaches its closed position.

23. Sun visor assembly according to any of the preceding claims, wherein the rear shell (2) comprises one single element, directly obtained as one single piece by injection moulding.

24. Sun visor assembly according to claim 18, wherein the rear shell comprises a shell part (2A) and a reinforcing grid part (2B), both obtained in separate steps of injection moulding, wherein coupling means (21, 22) of the rear shell arranged to interact with coupling means of the cartridge are embodied in said grid part (2B).

25. Sun visor, comprising a sun visor assembly according to any of the preceding claims, with the front shell (1) and rear shell (2) interconnected and the cartridge mounted between said front and rear shells, the cover being accessible through the opening (11) in the front shell (1).

26. Method of assembling a sun visor out of a sun visor assembly according to any of claims 1-24, comprising the steps of
- interconnecting the front shell (1) and the rear shell (2);
- inserting a projecting portion (32A) of the guide means for the cover through the opening (11) in the front shell (1);
- subsequently, inserting a main portion of the cartridge (3) through said opening until it becomes coupled to the rear shell (2).

27. Method according to claim 26, wherein said main portion of the cartridge (3) becomes coupled to the rear shell by snap connection.

## Patentansprüche

1. Sonnenblendenanordnung, umfassend:
ein vorderes Gehäuse (1) mit einer Spiegelöffnung (11), und ein hinteres Gehäuse (2), wobei das vordere Gehäuse und das hintere Gehäuse angeordnet sind, um miteinander gekoppelt zu werden und eine Verbindungseinrichtung (201) umfassen, um das vordere und das hintere Gehäuse sobald diese zusammengesetzt wurden zusammengekoppelt zu halten (1, 2), um einen Sonnenblendenkörperaufbau auszubilden, und
eine Kassette (3), die einen Spiegel (4) und eine Abdeckung (5) aufnimmt, wobei die Kassette Spiegelhaltemittel (31), um den Spiegel (4) zu halten, und Führungsmittel zum Führen der Abdeckung (5), so dass die Abdeckung (5) zwischen einer geöffneten Position, in der sie den Spiegel (4) im Wesentlichen nicht bedeckt, und einer geschlossenen Position, in der sie den Spiegel (4) bedeckt, gleiten kann, umfasst, wobei die Abdeckung (5) zwei Längsränder (51) aufweist, wobei die Führungsmittel für jeden Längsrand (51) zumindest eine Längsabstützoberfläche (32) schaffen, über die die Abdeckung (5) gleiten kann, wenn sie sich zwischen ihrer geschlossenen Position und ihrer offenen Position bewegt,
**dadurch gekennzeichnet, dass**
sich die zumindest eine Abstützoberfläche (32), wenn die Abdeckung (5) in ihrer geschlossenen Position ist, in Längsrichtung im Wesentlichen über den entsprechenden Längsrand (51) der Abdeckung (5) erstreckt, um eine Abstützung für den Längsrand (51) vorzusehen, wenn die Abdeckung (5) in Richtung ihrer geöffneten Position versetzt wird.

2. Sonnenblendenanordnung nach Anspruch 1, bei der die zumindest eine Abstützoberfläche (32) sich im Wesentlichen um einen Abstand X über den jeweiligen Längsrand (51) der Abdeckung erstreckt, wenn die Abdeckung in ihrer geschlossenen Position ist, wobei X gleich oder um 10% größer als die Länge des Längsrandes (51) ist.

3. Sonnenblendenanordnung nach Anspruch 2, bei der X gleich oder um 20% größer als die Länge des Längsrandes (51) ist.

4. Sonnenblendenanordnung nach Anspruch 2, bei der X gleich oder um 30% größer als die Länge des Längsrandes (51) ist.

5. Sonnenblendenanordnung nach Anspruch 2, bei der X gleich oder um 40% größer als die Länge des Längsrandes (51) ist.

6. Sonnenblendenanordnung nach Anspruch 2, bei der X gleich oder um 50% größer als die Länge des Längsrandes (51) ist.

7. Sonnenblendenanordnung nach Anspruch 2, bei der X gleich oder um 75% größer als die Länge des Längsrandes (51) ist.

8. Sonnenblendenanordnung nach einem der Ansprüche 2-5, bei der X geringer als 50% der Länge des Längsrandes (51) ist.

9. Sonnenblendenanordnung nach Anspruch 1, bei der die zumindest eine Abstützoberfläche (32) eine Länge von zumindest 125% der Länge des jeweiligen Längsrandes (51) aufweist.

10. Sonnenblendenanordnung nach Anspruch 1, bei der die zumindest eine Abstützoberfläche (32) eine Länge von zumindest 150% der Länge des jeweiligen Längsrandes (51) aufweist.

11. Sonnenblendenanordnung nach einem der vorhergehenden Ansprüche, bei der weder das vordere Gehäuse (1) noch das hintere Gehäuse (2) Führungsleisten zum Führen der Abdeckung, wenn sie sich zwischen ihrer geöffneten und ihrer geschlossenen Position bewegt, aufweisen.

12. Sonnenblendenanordnung nach einem der vorhergehenden Ansprüche, bei der die Kassette (3) einen Rahmenabschnitt (33), der angeordnet ist, um an einer äußeren Oberfläche des vorderen Gehäuses (1) anzuliegen, umfasst.

13. Sonnenblendenanordnung nach Anspruch 12, bei der zumindest eine Abstützoberfläche (32) sich in Längsrichtung über die orthogonale Projektion erstreckt.

14. Sonnenblendenanordnung nach Anspruch 13, bei der die zumindest eine Abstützoberfläche (32) sich in Längsrichtung um einen Abstand Y über die orthogonale Projektion des Rahmens erstreckt, wobei Y zumindest 15% der Länge der Abdeckung aufweist.

15. Sonnenblendenanordnung nach Anspruch 14, bei der Y zumindest 25% der Länge der Abdeckung aufweist.

16. Sonnenblendenanordnung nach einem der vorhergehenden Ansprüche, bei der die Kassette (3) eine Länge, die zumindest 15% länger als die Länge der Öffnung (11) ist, aufweist.

17. Sonnenblendenanordnung nach einem der vorhergehenden Ansprüche, bei der die Kassette (3) eine Länge aufweist, die zumindest 25% länger als die Länge der Öffnung (11) ist.

18. Sonnenblendenanordnung nach einem der vorhergehenden Ansprüche, bei der das hintere Gehäuse (2) Verbindungsmittel (21, 22) umfasst, die angeordnet sind, um mit den Verbindungsmitteln (301, 302) auf der Kassette zusammenzuwirken, um die Kassette (3) im zusammengesetzten Zustand mit dem hinteren Gehäuse (2) zu verriegeln.

19. Sonnenblendenanordnung nach einem der vorhergehenden Ansprüche, bei der die Kassette einen Körperabschnitt aufweist, der ausgelegt ist, um durch die Öffnung (11) in dem vorderen Gehäuse (1) eingebracht zu werden, wobei der Körperabschnitt die Führungsmittel für das Gehäuse umfasst.

20. Sonnenblendenanordnung nach einem der vorhergehenden Ansprüche, bei der zumindest ein Teil der Führungsmittel (32B) angeordnet ist, um eine Führungsbahn festzulegen, die ausgelegt ist, um einen entsprechenden Längsrand des Gehäuses unterzubringen, wobei die Führungsmittel an gegenüberliegenden Oberflächen der Abdeckung entlang der Führungsbahn anliegen.

21. Sonnenblendenanordnung nach einem der vorhergehenden Ansprüche, bei der die Kassette mit zumindest einem flexiblen Element (303) versehen ist, das angeordnet ist, um an einer hinteren Oberfläche der Abdeckung (5) anzuliegen.

22. Sonnenblendenanordnung nach einem der vorhergehenden Ansprüche, bei der die Abdeckung (5) mit zumindest zwei Positionsfestlegeelementen (304, 305) versehen ist, die angeordnet sind, um mit dem zumindest einen flexiblen Element (303) zusammenzuwirken, wenn die Abdeckung von ihrer geschlossenen Position in ihre geöffnete Position übergeht, um eine Schnappwirkung zwischen einem ersten (304) der Positionsfestlegeelemente und dem flexiblen Element (303), wenn die Abdeckung ihre geöffnete Position erreicht, und eine Schnappwirkung zwischen einem zweiten (305) der Positionsfestlegeelemente und dem flexiblen Element (303), wenn die Abdeckung ihre geschlossene Position erreicht, vorzusehen.

23. Sonnenblendenanordnung nach einem der vorhergehenden Ansprüche, bei der das hintere Gehäuse (2) ein einzelnes Element, das direkt als ein einzelnes Teil durch Spritzgießen erhalten wird, umfasst.

24. Sonnenblendenanordnung nach Anspruch 18, bei der das hintere Gehäuse zumindest einen Gehäuseabschnitt (2A) und einen Verstärkungsgitterabschnitt (2B), die beide in getrennten Schritten des Spritzgießens erhalten werden, umfasst, wobei die Verbindungsmittel (21, 22) des hinteren Gehäuses, die angeordnet sind, um mit den Verbindungsmitteln der Kassette zusammenzuwirken, in dem Gitterabschnitt (2B) ausgebildet sind.

25. Sonnenblende umfassend eine Sonnenblendenanordnung nach einem der vorhergehenden Ansprüche mit verbundenem vorderen Gehäuse (1) und hinterem Gehäuse (2) und bei der die Kassette zwischen dem vorderen und dem hinteren Gehäuse angeordnet ist, wobei die Abdeckung durch die Öffnung (11) in dem vorderen Gehäuse zugänglich ist.

26. Verfahren zum Herstellen einer Sonnenblende aus einer Sonnenblendenanordnung nach einem der vorhergehenden Ansprüche 1-24, umfassend die Schritte
- Verbinden des vorderen Gehäuses (1) und des hinteren Gehäuses (2),
- Einbringen eines Erstreckungsabschnittes (32A) der Führungsmittel für das Gehäuse durch die Öffnung (11) in dem vorderen Gehäuse (1),
- anschließendes Einbringen eines Hauptabschnittes der Kassette (3) durch die Öffnung bis er mit dem hinteren Gehäuse (2) verbunden wird.

27. Verfahren nach Anspruch 26, bei dem der Hauptabschnitt der Kassette (3) mit dem hinteren Gehäuse durch eine Schnappverbindung verbunden wird.

## Revendications

1. Ensemble de pare-soleil comprenant :
une coque avant (1) ayant une ouverture de miroir (11) et une coque arrière (2), la coque avant et la coque arrière étant agencées pour être couplées ensemble et comprenant des moyens de raccordement (201) pour maintenir lesdites coques avant et arrière (1, 2) couplées ensemble, une fois qu'elles ont été assemblées l'une par rapport à l'autre, afin de constituer une structure de corps de pare-soleil, et
une cartouche (3) logeant un miroir (4) et un couvercle (5), ladite cartouche comprenant des moyens de support de miroir (31) pour maintenir le miroir (4) et des moyens de guidage pour guider le couvercle (5) de sorte que le couvercle (5) peut coulisser entre une position ouverte dans laquelle il ne recouvre sensiblement pas le miroir (4) et une position fermée dans laquelle il recouvre sensiblement le miroir (4), ledit couvercle (5) ayant deux bords longitudinaux (51), lesdits moyens de guidage établissant, pour chaque bord longitudinal (51), au moins une surface de support longitudinale (32) sur laquelle le couvercle (5) peut coulisser lorsqu'il se déplace entre sa position fermée et sa position ouverte ;
**caractérisé en ce que** :
lorsque le couvercle (5) est dans sa position fermée, ladite au moins une surface de support (32) s'étend de manière longitudinale au-delà du bord longitudinal (51) correspondant du couvercle (5) afin de fournir le support audit bord longitudinal (51) lorsque le couvercle (5) est déplacé vers sa position ouverte.

2. Ensemble de pare-soleil selon la revendication 1, dans lequel ladite au moins une surface de support (32) s'étend longitudinalement sur une distance X au-delà du bord longitudinal (51) correspondant du couvercle lorsque le couvercle est dans la position fermée, X étant égal ou supérieur à 10% de la longueur dudit bord longitudinal (51).

3. Ensemble de pare-soleil selon la revendication 2, dans lequel X est égal ou supérieur à 20% de la longueur dudit bord longitudinal (51).

4. Ensemble de pare-soleil selon la revendication 2, dans lequel X est égal ou supérieur à 30% de la longueur dudit bord longitudinal (51).

5. Ensemble de pare-soleil selon la revendication 2, dans lequel X est égal ou supérieur à 40% de la longueur dudit bord longitudinal (51).

6. Ensemble de pare-soleil selon la revendication 2, dans lequel X est égal ou supérieur à 50% de la longueur dudit bord longitudinal (51).

7. Ensemble de pare-soleil selon la revendication 2, dans lequel X est égal ou supérieur à 75% de la longueur dudit bord longitudinal (51).

8. Ensemble de pare-soleil selon l'une quelconque des revendications 2 à 5, dans lequel X est inférieur à 50% de la longueur dudit bord longitudinal (51).

9. Ensemble de pare-soleil selon la revendication 1, dans lequel ladite au moins une surface de support (32) a une longueur représentant au moins 125% de la longueur du bord longitudinal (51) correspondant.

10. Ensemble de pare-soleil selon la revendication 1, dans lequel ladite au moins une surface de support (32) a une longueur représentant au moins 150% de la longueur du bord longitudinal (51) correspondant.

11. Ensemble de pare-soleil selon l'une quelconque des revendications précédentes, dans lequel aucune parmi ladite coque avant (1) et ladite coque arrière (2) ne comprend de rails de guidage pour guider ledit couvercle lorsqu'il se déplace entre sa position ouverte et sa position fermée.

12. Ensemble de pare-soleil selon l'une quelconque des revendications précédentes, dans lequel ladite cartouche comprend une partie de châssis (33) agencée pour venir en butée contre une surface externe de ladite coque avant (1).

13. Ensemble de pare-soleil selon la revendication 12, dans lequel ladite au moins une surface de support (32) s'étend longitudinalement au-delà de la saillie orthogonale du châssis.

14. Ensemble de pare-soleil selon la revendication 13, dans lequel ladite au moins une surface de support (32) s'étend longitudinalement sur une distance Y au-delà de la saillie orthogonale du châssis, Y représentant au moins 15% de la longueur du couvercle.

15. Ensemble de pare-soleil selon la revendication 14, dans lequel Y représente au moins 25% de la longueur du couvercle.

16. Ensemble de pare-soleil selon l'une quelconque des revendications précédentes, dans lequel la cartouche (3) a une longueur au moins 15% plus longue que la longueur de l'ouverture (11).

17. Ensemble de pare-soleil selon l'une quelconque des revendications précédentes, dans lequel la cartouche (3) a une longueur au moins 25% plus longue que la longueur de l'ouverture (11).

18. Ensemble de pare-soleil selon l'une quelconque des revendications précédentes, dans lequel ladite coque arrière (2) comprend des moyens de couplage (21, 22) agencés pour interagir avec des moyens de couplage (301, 302) sur la cartouche, afin de bloquer la cartouche (3) sur la coque arrière (2) lorsqu'elle est assemblée.

19. Ensemble de pare-soleil selon l'une quelconque des revendications précédentes, dans lequel la cartouche a une partie de corps dimensionnée pour être insérée à travers l'ouverture (11) dans la coque avant (1), ladite partie de corps comprenant desdits moyens de guidage pour le couvercle.

20. Ensemble de pare-soleil selon l'une quelconque des revendications précédentes, dans lequel au moins une partie desdits moyens de guidage (32B) est agencée pour définir un canal de guidage dimensionné pour loger un bord longitudinal correspondant du couvercle, lesdits moyens de guidage venant en butée contre des surfaces opposées du couvercle le long dudit canal de guidage.

21. Ensemble de pare-soleil selon l'une quelconque des revendications précédentes, dans lequel ladite cartouche est prévue avec au moins un élément flexible (303) agencé pour venir en butée contre une surface arrière du couvercle (5).

22. Ensemble de pare-soleil selon la revendication 20, dans lequel ledit couvercle (5) est prévu avec au moins deux éléments de définition de position (304, 305) agencés pour interagir avec ledit au moins un élément flexible (303) lorsque le couvercle passe de sa position fermée à sa position ouverte, afin de fournir un ajustement par pression entre un premier élément (304) desdits éléments de définition de position et ledit élément flexible (303) lorsque le couvercle atteint sensiblement sa position ouverte, et une interaction par pression entre un second élément (305) desdits éléments de définition de position et ledit élément flexible (303) lorsque le couvercle atteint sensiblement sa position fermée.

23. Ensemble de pare-soleil selon l'une quelconque des revendications précédentes, dans lequel la coque arrière (2) comprend un seul élément, obtenu directement d'un seul tenant par moulage par injection.

24. Ensemble de pare-soleil selon la revendication 18, dans lequel la coque arrière comprend une partie de coque (2A) et une partie de grille de renforcement (2B), les deux obtenues dans des étapes séparées de moulage par injection, dans lequel des moyens de couplage (21, 22) de la coque arrière agencés pour interagir avec des moyens de couplage de la cartouche sont mis en oeuvre dans ladite partie de grille (2B).

25. Pare-soleil comprenant un ensemble de pare-soleil selon l'une quelconque des revendications précédentes, avec la coque avant (1) et la coque arrière (2) interconnectée et la cartouche montée entre lesdites coques avant et arrière, le couvercle étant accessible à travers l'ouverture (11) dans la coque avant (1).

26. Procédé pour assembler un pare-soleil d'un ensemble de pare-soleil selon l'une quelconque des revendications 1 à 24, comprenant les étapes consistant à :
interconnecter la coque avant (1) et la coque arrière (2) ;
insérer une partie en saillie (32A) des moyens de guidage pour le couvercle à travers l'ouverture (11) dans la coque avant (1) ;
ensuite, insérer une partie principale de la cartouche (3) à travers ladite ouverture jusqu'à ce qu'elle soit couplée à la coque arrière (2).

27. Procédé selon la revendication 26, dans lequel ladite partie principale de la cartouche (3) est couplée à la coque arrière par raccordement par pression.
